# EUROPÄISCHE PATENTSCHRIFT

(11) **EP 1 878 615 B1**
(45) Veröffentlichungstag und Bekanntmachung des Hinweises auf die Patenterteilung: **21.10.2009**
(21) Anmeldenummer: 07110316.2
(22) Anmeldetag: 14.06.2007
(51) Int. Cl.: B60Q 1/48, B60Q 1/52, G08G 1/16

(54) **Warneinrichtung und Verfahren zur Umfeldüberwachung**
Warning device and method for monitoring an environment
Dispositif d'avertissement et procédé destiné à la surveillance de l'environnement

(30) Priorität: 13.07.2006 DE 102006032541
(43) Veröffentlichungstag der Anmeldung: 16.01.2008
(73) Patentinhaber: ROBERT BOSCH GMBH, 70442 Stuttgart (DE)
(72) Erfinder: Mueller, Elmar, 71706 Markgroeningen (DE); Langsch, Martin, 70469 Stuttgart (DE); Kleemann, Ralf, 72666 Neckartailfingen (DE); Boronka, Alexander, 74369 Loechgau (DE)

(56) Entgegenhaltungen:
- WO-A-20/05051709
- DE-A1- 10 007 501
- DE-A1- 10 244 205
- DE-A1- 10 321 904
- US-A1- 2004 178 893

## Beschreibung

### Stand der Technik

Aus der DE 102 44 205 A1 ist ein Verfahren zur Kollisionsverhinderung von Fahrzeugen bekannt, bei dem die Umgebung eines Fahrzeugs mittels Sensoren erfasst wird. Hierzu ist beispielsweise ein Videosystem zur Erfassung des Nahbereichs und ein Radarsystem zur Erfassung eines weiter entfernt liegenden Bereichs vorgesehen. Die Umfeldsensorik ist mit einem Funktionsmodell verbunden, dass die Ausgangssignale der Sensoren verarbeitet und dass diese Ausgangssignale zwecks Erkennung der Fahrspur und von Verkehrszeichen auswertet. Aus den Signalen wird ferner ein Vorfahrtsmissachtungsmaß und ein Kollisionsgefährdungsmaß abgeleitet, auf dem wiederum eine Gefährdungsstufe bestimmt wird. Abhängig von einer ermittelten Gefährdungsstufe werden schließlich Schritte zur Verringerung einer Kollisionsgefahr eingeleitet.

Die Erfindung geht aus von einer Warneinrichtung oder einem Verfahren zur Umfeldüberwachung nach Gattung der unabhängigen Ansprüche. Aus der EP 0 650 866 A2 sind bereits ein Verfahren und eine Vorrichtung zum Ausparken eines Fahrzeugs bekannt. Mittels von am Fahrzeug angebrachten Sensoren wird sowohl der Abstand, als auch der Lenkwinkel des fahrenden Fahrzeugs erfasst, wobei kontinuierlich der Abstand zu den das Fahrzeug umgebenden Hindernissen ermittelt wird. Aufgrund der Daten wird in einem Rechnermodul eine aktuelle lokale Umgebungskarte angelegt. Auf Basis der Umgebungskarte wird eine Fahrstrategie zum Ausparken des Fahrzeugs ermittelt. Entsprechende Fahrtrichtungsanzeiger geben dem Fahrer des Fahrzeugs die Fahrtrichtung vor.

### Offenbarung der Erfindung

### Vorteile der Erfindung

Die erfindungsgemäße Warneinrichtung mit den Merkmalen des Anspruchs 1 hat demgegenüber den Vorteil, dass der Fahrer zumindest eine Warnung vor Hindernissen erhält, die sich auf der Fahrbahn bewegen, in die er einfahren will. Ein Einfahren auf eine Fahrbahn ist für einen Fahrer einerseits bei einem Ausparken, insbesondere aber auch bei einem Fahren aus engen Einfahrten besonders unübersichtlich. Mitunter sind die Sichtverhältnisse derart schlecht, dass der Fahrer sich praktisch in den Fahrbahnbereich "vortasten" muss. Die erfindungsgemäße Warneinrichtung weist zur Überwachung der Fahrbahn eine Sensoreinrichtung zur Überwachung eines Fernbereichs des Fahrzeugs auf, so dass auch Fahrzeuge außerhalb des unmittelbaren Nahbereichs des Fahrzeugs, die sich dem Fahrzeug nähern, erfasst werden können. Somit kann der Fahrer insbesondere auch vor Querverkehr gewarnt werden, der dem Fahrer bzw. dem Fahrzeug bei einem Einfahren auf die Querfahrbahn gefährlich werden kann. Hiermit wird es dem Fahrer ermöglicht, auch ein Einfahren auf eine Fahrbahn bei eingeschränkten Sichtverhältnissen sicher zu ermöglichen.

Besonders vorteilhaft ist es, den Nahbereich des Fahrzeugs zu vermessen, um auf den Verlauf der Fahrbahn zu schließen, auf die das Fahrzeug einfährt. Hierdurch kann der Mess- und Auswerteaufwand auf diejenigen Bereiche in der Umgebung des Fahrzeugs konzentriert werden, von denen tatsächlich eine potentielle Gefährdung des Fahrzeugs ausgehen kann. Hierdurch kann die Genauigkeit einer Warnung verbessert werden. Durch die automatische Ermittlung der Ausrichtung einer Fahrbahn kann auf eine Benutzereingabe verzichtet werden, die eine bestimmte Messrichtung insbesondere der Sensoreinrichtung zur Überwachung eines Fernbereichs vorgibt.

Ferner ist es erfindungsgemäß vorteilhaft, die Sensoreinrichtung zur Überwachung eines Fernbereichs so zu betreiben, dass Hindernisse im Nahbereich ausgeblendet bzw. für die Warnung nicht berücksichtigt werden. Hierdurch ist es möglich, insbesondere gefährliche Hindernisse in größerer Entfernung besser zu erfassen, ohne dass Hindernisse im Nahbereich des Fahrzeugs die Messungen beeinflussen können.

Durch die in den abhängigen Ansprüchen aufgeführten Maßnahmen sind vorteilhafte Weiterbildungen und Verbesserungen der in dem Anspruch 1 angegebenen Warneinrichtung und des in dem nebengeordneten Anspruch angegebenen Verfahrens zur Umfeldüberwachung möglich. So ist es vorteilhaft, Sensoren möglichst an einem vorderen und/oder hinteren Ende des Fahrzeugs anzuordnen. Denn die Position an den Fahrzeugvorder- bzw. rückseiten oder an den vorderen bzw. hinteren Seitenkanten ermöglicht mitunter einen weitaus besseren Blickwinkel, als die Position des Fahrers diesem bietet. Durch die ausgesetzte Position an den Fahrzeugenden ist es den Sensoren möglich, gegenüber der Position des Fahrers somit in eine Fahrbahn, in die der Fahrer hineinfährt, vorauszuschauen. Der Erfassungsbereich der Sensoren wird durch eine entsprechende Anordnung an Positionen an den Fahrzeugenden somit vergrößert.

Ferner ist es vorteilhaft, Messfelder der Sensoren ungefähr senkrecht zur Längsachse des Fahrzeugs auszurichten. Insbesondere bei einem Einfahren auf eine Fahrbahn aus einer sehr engen Einfahrt senkrecht auf eine Fahrbahn bzw. aus einer Querparklücke senkrecht zu der Fahrbahn ist es somit möglich, Hindernisse, die sich seitlich auf das Fahrzeug zu bewegen, besonders gut zu erfassen.

Es ist weiterhin vorteilhaft, den Messbereich der Sensoren auf eine Fahrbahn vor bzw. hinter dem Fahrzeug so auszurichten, dass eine Fahrbahn, die sich praktisch neben dem Fahrzeug befindet, überwacht wird. Eine solche Überwachung ist dann vorteilhaft, wenn das Fahrzeug beispielsweise aus einer Längsparklücke ausparkt, die parallel zu einer Fahrbahn verläuft, und auf die Fahrbahn einfahren will, die sich seitlich neben dem Längsparkstreifen befindet. Durch eine entsprechende Überwachung kann der Verkehr, der auf der Fahrbahn fährt, sicher überwacht werden.

Weiterhin ist es vorteilhaft, zusätzlich zu einer Ausgabe einer Warnung eine Schnittstelle zu einer Bremseinrichtung vorzusehen, die gegebenenfalls eine Bremsung des Fahrzeugs veranlassen kann, wenn das Fahrzeug droht, mit einem sich auf das Fahrzeug zu bewegenden Hindernis zu kollidieren. Somit kann ein Zusammenstoß sicher verhindert werden.

Es ist ferner vorteilhaft, die Sensorenüberwachung des Fernbereichs des Fahrzeugs in Abhängigkeit von einer Fahrtrichtungswahl des Fahrzeugs zu betreiben. Hierdurch kann insbesondere in diejenige Richtung, in die das Fahrzeug fahren soll, eine Überwachung erfolgen. Dies ist insbesondere bei einem Ausparken aus einer Längsparklücke von Vorteil, bei der durch die Richtungswahl vorgegeben ist, in welche Richtung der Fahrer auf eine Fahrbahn einfahren will, während z. B. auf der gegenüberliegenden Seite bei einer fehlenden Begrenzung der Parklücke ebenfalls möglicherweise ein Ausfahren möglich wäre.

Weiterhin ist es vorteilhaft, insbesondere in diejenige Richtung eine Aktivierung einer Fernbereichsüberwachung vorzunehmen, in der eine sprunghafte Änderung des Abstands in einem Nahbereich entweder auf einen größeren Wert oder, in Bezug auf den Nahbereich, auf "unendlich" festgestellt wurde. Wird das Fahrzeug beispielsweise aus einer Querparklücke oder aus einer Einfahrt herausgeführt, so ändert sich mit einem Heraussetzen aus der Parklücke bzw. der Einfahrt sprunghaft der seitliche Abstand an der Kante einer seitlichen Begrenzung. Durch eine Auswertung dieses Abstands-Unterschiedes kann sehr sicher eine Fernbereichsüberwachung rechtzeitig aktiviert werden.

### Kurze Beschreibung der Zeichnungen

Ausführungsbeispiele der Erfindung sind in den Zeichnungen dargestellt und in der nachfolgenden Beschreibung näher erläutert. Es zeigen Figur 1 ein Fahrzeug mit einer erfindungsgemäßen Warneinrichtung schematisch in einer Aufsicht, Figur 2 ein Detail von Sensoreinrichtungen einer erfindungsgemäßen Warneinrichtung, Figur 3 ein erstes Ausführungsbeispiel für die Verwendung einer erfindungsgemäßen Warneinrichtung und die Durchführung eines erfindungsgemäßen Verfahrens zur Umfeldüberwachung bei einem Ausfahren aus einer Einfahrt senkrecht auf eine Straße, Figur 4 eine Verwendung einer erfindungsgemäßen Warneinrichtung und ein Beispiel für eine Durchführung eines erfindungsgemäßen Verfahrens zur Umfeldüberwachung bei einem Ausparken aus einer Längsparklücke in einen Straßenverlauf.

### Ausführungsformen der Erfindung

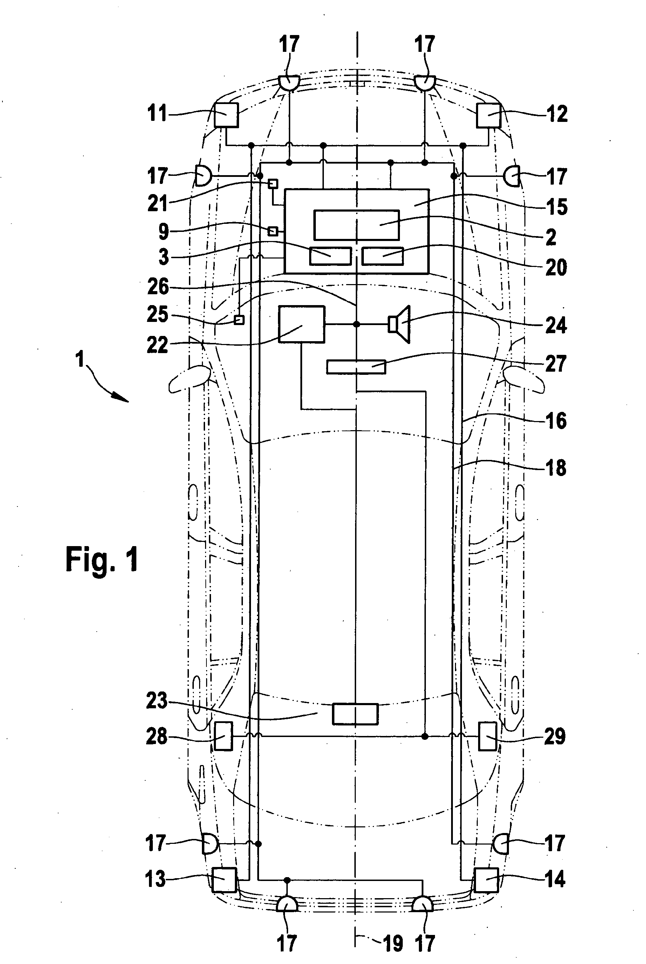

In der Figur 1 ist ein Kraftfahrzeug 1 dargestellt, bei dem im Bereich der Fahrzeugecken jeweils Sensoreinrichtungen angeordnet sind. An der linken, vorderen Fahrzeugecke ist eine erste Sensoreinrichtung 11, an der rechten vorderen Fahrzeugecke eine zweite Sensoreinrichtung 12, an der hinteren linken Fahrzeugecke eine dritte Sensoreinrichtung 13 und an der vierten rechten Fahrzeugecke eine vierte Sensoreinrichtung 14 vorgesehen. Die Sensoreinrichtungen 11, 12, 13, 14 sind mit einer Steuereinheit 15 über einen Datenbus 16 verbunden. Die Steuereinheit 15 weist eine Recheneinheit 2 auf, die eine Auswertung der von den Sensoreinrichtungen 11, 12, 13, 14 übermittelten Messergebnisse übernimmt. In einer ersten Ausführungsform kann sie auch eine Ansteuerung der Sensoreinrichtungen vornehmen. Ferner ist es aber auch möglich, dass hierfür eine zusätzliche Ansteuereinheit 3 in der Steuereinheit 15 vorgesehen ist.

In einer weiteren Ausführungsform können an den Fahrzeugseiten weitere Abstandssensoren 17 vorgesehen sein. Die weiteren Abstandssensoren 17 sind bevorzugt als Ultraschallsensoren ausgeführt. Sie senden Ultraschallsignale aus und empfangen von Hindernissen reflektierte Ultraschallsignale wieder. Aus der Laufzeit der Ultraschallsignale zu den Hindernissen und zurück zu den Sensoren 17 kann der Abstand zu Hindernissen in einem Nahbereich des Fahrzeugs bestimmt werden. Bevorzugt weisen die Ultraschallsensoren eine Reichweite von etwa 0,2 m bis 5m auf. Die Ultraschallsensoren sind über einen weiteren Datenbus 18 vorzugsweise auch mit der Steuereinheit 15 zu Ansteuerung und Auswertung verbunden. Alternativ kann den Ultraschallsensoren 17 eine weitere, eigene Steuereinheit zugeordnet sein.

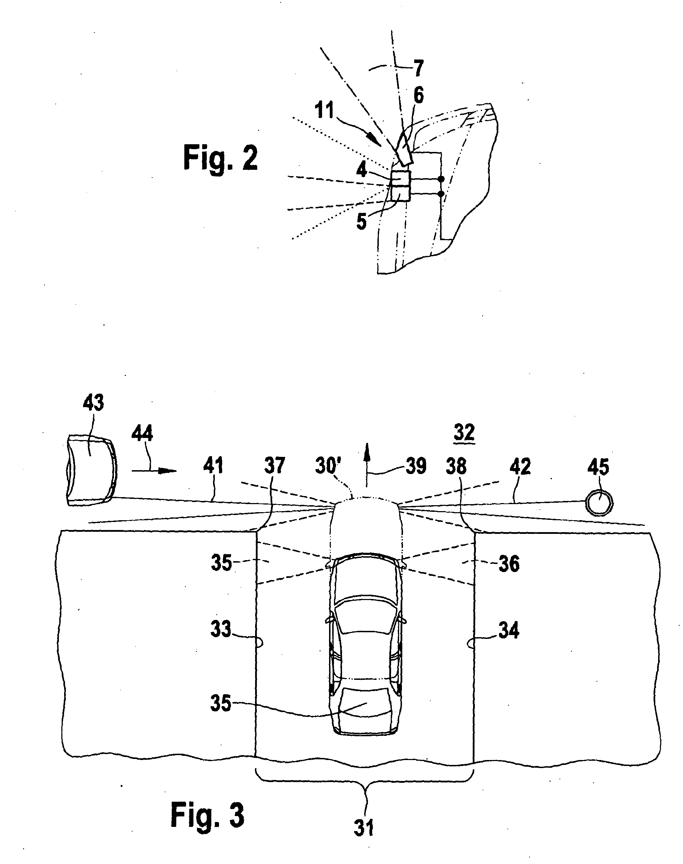

Die Struktur der Sensoreinrichtungen 11, 12, 13, 14 ist in der Figur 2 am Beispiel der ersten Sensoreinrichtung 11 im Detail dargestellt. Die erste Sensoreinrichtung 11 weist einen an der linken Fahrzeuglängsseite angeordneten Nahbereichs-Abstandssensor 4 auf. Der Nahbereich-Abstandssensor 4 ist bevorzugt als ein Ultraschallsensor ausgeführt. Ferner ist auch die Ausführung als ein Infrarot-Sensor möglich. Benachbart zu dem Nahbereichs-Abstandssensor 4 ist ein Fernbereichs-Abstandssensor 5 an der linken Fahrzeuglängsseite angeordnet. Alternativ oder ergänzend zu dem ersten Fernbereichssensor 5 ist ein zweiter Fernbereichssensor 6 derart im Bereich der Fahrzeugecke bzw. an der Fahrzeug-Längsseite, gegebenenfalls aber auch an der Fahrzeug-Schmalseite angeordnet, dass ein Messbereich 7 in einen Bereich seitlich links des Fahrzeugs, jedoch vor dem Fahrzeug, eingestrahlt wird. Die Reichweite der Fernbereichs-Abstandssensoren liegt vorzugsweise in einem Bereich zwischen 5 m und 100 m. Hierzu sind die Fernbereichsensoren beispielsweise als Videosensoren, als Radarsensoren oder als Lidarsensoren ausgeführt. Ein Sendebereich des Nahbereichssensors 4 ist so ausgestaltet, dass er senkrecht zu einer in der Figur 1 strichpunktiert dargestellten, gedachten Fahrzeuglängsachse 19 des Fahrzeugs ausgerichtet ist. Ebenso ist der Fernbereichssensor 5 senkrecht zu der Längsachse 19 des Fahrzeugs ausgerichtet.

Die Steuereinheit 15 weist in einer bevorzugten Ausführungsform eine Speichereinheit 20 auf, in der die Fahrzeugabmessungen des Fahrzeugs 1 abgelegt sind. In einer weiteren Ausführungsform ist die Steuereinheit 15 ferner über eine Datenschnittstelle mit einem Lenkwinkelsensor 21 verbunden. Über den Lenkwinkelsensor 21 ist der gerade eingeschlagene Lenkwinkel des Fahrzeugs abfragbar. Damit kann die Steuereinheit 15 ermitteln, in welche Richtung das Fahrzeug fahren wird.

Um eine Warnung an einen Fahrer des Fahrzeugs bei einem sich nähernden Hindernis auszugeben, ist die Steuereinheit 15 ferner mit einer Anzeigeeinheit 22 verbunden. Die Anzeigeeinheit 22 ist bevorzugt in einer Mittelkonsole oder in einem Bereich der Instrumententafel vor dem Fahrer angeordnet. Um dem Fahrer auch eine Warnung bei einer Rückwärtsfahrt zu geben, ist in einer vorteilhaften Ausgestaltung eine weitere Anzeige 23 vorgesehen, die beispielsweise im Bereich der hinteren Bremsleuchte des Fahrzeugs oder an einer Decke des Fahrzeugs so angeordnet ist, dass der Fahrer diese Warnleuchte sehen kann, wenn er sich umdreht oder wenn er in den Rückspiegel schaut. Ergänzend oder alternativ zu einer Anzeige ist eine akustische Ausgabeeinheit 24 vorgesehen, mit der eine akustische Warnung ausgegeben werden kann. Die akustische Ausgabeeinheit 24 wird ebenfalls von der Steuereinheit 15 angesteuert.

In einer weiteren Ausführungsform ist ein Sensor 25 zur Feststellung einer Richtungsanzeige vorgesehen. Betätigt der Fahrer also die Richtungsanzeige des Fahrzeugs, so wird die eingeschlagene Richtung der Steuereinheit 15 mitgeteilt. In einer weiteren Ausführungsform der Erfindung ist die Steuereinheit 15 ferner über eine Datenschnittstelle 26 mit einer Bremsensteuereinheit 27 des Fahrzeugs zur Ansteuerung von Fahrzeugbremsen 28, 29 verbunden. Für den Fall, dass sich ein Hindernis in der Nähe des Fahrzeugs befindet und die Steuereinheit 15 eine Kollisionsgefahr annimmt, kann die Steuereinheit 15 über die Schnittstelle 26 die Bremsensteuereinheit 27 dazu auffordern, die Fahrzeugbremsen 28, 29 zu aktivieren und das Fahrzeug damit anzuhalten.

In der Figur 3 ist eine Durchführung eines erfindungsgemäßen Verfahrens zur Umfeldüberwachung dargestellt, bei der ein Fahrzeug 1 aus einer Einfahrt 31 auf eine Fahrbahn 32 einfährt. Das Fahrzeug 1 ist zunächst in der mit der durchgezogenen Linie in der Figur 3 dargestellten Position innerhalb der Einfahrt 31 lokalisiert und bewegt sich in Richtung des Pfeils 39 auf die Fahrbahn 32 zu. Die Einfahrt ist in dem hier gezeigten Beispiel als eine Hauseinfahrt eingeführt und durch Wände 33, 34 jeweils seitlich begrenzt. Statt einer Hauseinfahrt kann die Einfahrt 31 aber beispielsweise auch als eine Querparklücke ausgebildet sein, die senkrecht zu einer Fahrbahn ausgerichtet ist. In einer ersten Ausführungsform können alle Sensoreinrichtungen 11, 12, 13, 14 und 17 des Fahrzeugs 30 aktiviert sein und die Umgebung des Fahrzeugs 1 in einem Nahbereich vermessen. In einer weiteren Ausführungsform können jedoch auch lediglich die Nahbereichs-Abstandssensoren der Sensoreinrichtungen der linken vorderen und der rechten vorderen Ecke des Fahrzeugs aktiviert sein. Bei der Positionierung des Fahrzeugs entsprechend der Kontur mit durchgezogener Linie in der Figur 3 ist in den Messbereichen 35, 36 der Nahbereichssensoren ein Hindernis messbar, nämlich die linke und die rechte Seitenwand 33, 34 der Einfahrt 31. Die Fernbereichsmessung ist zu diesem Zeitpunkt noch deaktiviert. Bewegt sich das Fahrzeug entsprechend der Pfeildarstellung 39 nun auf die mit einer gestrichelten Linie dargestellte Position 30', so messen bei der Vorbeifahrt an den vorderen Kanten 37, 38 die Nahbereichs-Sensoreinrichtungen an den vorderen Fahrzeugkanten mit ihren Messbereichen 35 und 36 eine sprunghafte Erhöhung des Abstandes. Nun werden die seitlichen Sensoren zur Überwachung eines Fernbereichs aktiviert. Hierbei wird ein erster Fernbereichs-Messstrahl 41 nach links und ein zweiter Fernbereichs-Messstrahl 42 nach rechts ausgesendet. Die Fernbereichs-Überwachungseinrichtungen sind bevorzugt als Radarsensoren ausgeführt. Diese messen, insbesondere mit einem geringen Öffnungswinkel, in einem Gigahertz-Frequenzbereich den Abstand zu Hindernissen, indem sie Radarstrahlen aussenden, die von den Objekten reflektiert und wieder empfangen werden. Der Abstand zu den Objekten kann aus der Phasenverschiebung bzw. der Laufzeit der Radarstrahlen ermittelt werden. Bevorzugt ist die Steuereinheit 15 hierbei dazu ausgelegt, eine Änderung des Abstandes von Hindernissen zu dem Fahrzeug 1 auch über die Zeit zu verfolgen. Wird der linke Messstrahl 41 ausgesendet, so trifft er auf ein Fahrzeug 43, dass sich in Pfeilrichtung 44 auf das ausfahrende Fahrzeug 1 zubewegt. Aufgrund der Änderung des Abstandes über die Zeit erkennt die Steuereinheit 15, dass sich das Fahrzeug 43 dem Fahrzeug 1 annähert. Folglich wird eine Warnung ausgegeben, dass sich von links ein Fahrzeug annähert. Der Messstrahl 42 des rechten Sensors zur Fernbereichsüberwachung trifft auf einen Blumenkübel 45, der unbewegt ist. Daher wird keine Warnung ausgegeben, dass sich von rechts ein Hindernis nähert. Entsprechend können neben Kraftfahrzeugen auch Fahrradfahrer, Fußgänger oder Tiere von den Messfeldern der Messstrahlen 41, 42 erfasst werden. Wird kein Hindernis erfasst, so wird dies bevorzugt dem Fahrer ebenfalls angezeigt, so dass er beruhigt auf die Fahrbahn 32 ausfahren kann.

In einer ersten Ausführungsform muss der Fahrer die entsprechenden Sensoreinrichtungen noch aktivieren, wenn sich das Fahrzeug 1 in der Einfahrt befindet. In einer weiteren Ausführungsform kann die Steuereinheit 15 jedoch auch mittels der Sensoreinrichtung 11, 12, 13, 14 bzw. mit den Abstandssensoren 17 ein Umgebungsmodell des Fahrzeugs 1 ermitteln. Befindet sich auf der linken und auf der rechten Seite des Fahrzeugs ein Hindernis, und fährt das Fahrzeug vorwärts, so ist davon auszugehen, dass das Fahrzeug 1 auf eine Fahrbahn einfährt, die ungefähr senkrecht zur aktuellen Fahrtrichtung des Fahrzeugs verläuft. Insbesondere können dann die seitlichen Abstände über die seitlichen Nahbereichs-Abstandssensoren überwacht und entsprechend die seitlich ausgerichteten Fernbereichs-Abstandssensoren automatisch aktiviert werden.

Entsprechend einer Vorwärtsfahrt, bei der das Fahrzeug vorwärts aus der Einfahrt 31 herausgeführt wird, kann das Fahrzeug in entsprechender Weise auch in einer Rückwärtsfahrt aus der Einfahrt 31 hinausgeführt werden. In diesem Fall werden die entsprechend dann in Fahrtrichtung liegenden Sensoreinrichtungen 13, 14 am hinteren Ende des Fahrzeugs aktiviert, die dann bei einer Rückwärtsfahrt ebenfalls eine Vermessung der Hindernisse auf der Fahrbahn in entsprechender Weise durchführen, sobald das Fahrzeug mit dem Heck die Einfahrt 31 verlassen hat.

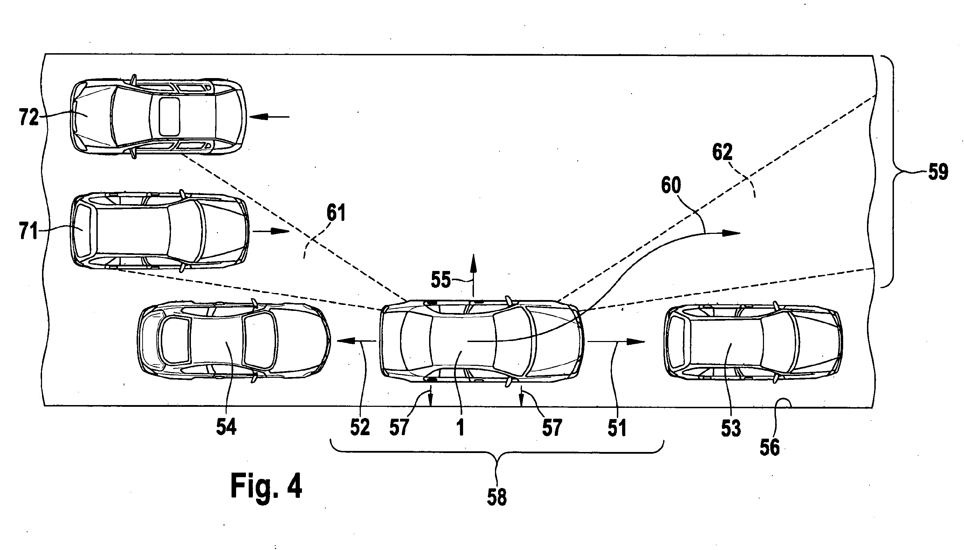

Eine andere Umgebungssituation stellt sich in der Figur 4 dar. Hier detektieren die Abstandssensoren Hindernisse vor und hinter dem Fahrzeug, wie es durch Pfeile 51, 52 in der Figur 4 dargestellt ist. Vor dem Fahrzeug 1 befindet sich ein weiteres Fahrzeug 53. Hinter dem Fahrzeug befindet sich ebenfalls ein weiteres Fahrzeug 54. In wenigstens eine seitliche Richtung wird ein größerer Abstand, dargestellt durch einen Pfeil 55, gemessen. Ebenfalls ist es möglich, dass auch zu der anderen Fahrzeugseite ein größerer Abstand gemessen wird. Im hier gezeigten Ausführungsbeispiel wird jedoch ein geringer Abstand, dargestellt durch Pfeile 57 zu einer Mauer 56 gemessen. Entsprechend der gezeigten Darstellung wird nun ein seitliches Herausfahren aus einer Parklücke 58 angenommen. In diesem Fall werden die an den Ecken vorgesehenen Fernbereichs-Abstandssensoren 6 aktiviert. Entsprechend der gemessenen Umgebung des Fahrzeugs 1 wird ein Herausfahren nach vorne in die Fahrbahn entsprechend dem gezeigten Wegverlauf 60 angenommen. Der Wegverlauf 60 kann zusätzlich durch die Auswertung der Betätigung der Richtungsanzeige mittels des Richtungsanzeigensensors 25 in der Richtung des Wegverlaufs 60 bestätigt werden. Ferner ist es auch möglich, den eingeschlagenen Lenkwinkel abzufragen. Hat ein Fahrer bereits in die gewünschte Fahrtrichtung eingeschlagen, so wird dies über den Lenkwinkelsensor 21 der Steuereinheit 15 mitgeteilt. Ergänzend kann auch eine Gangwahl des Fahrers für eine Richtungsbestimmung ausgewertet werden. Im Folgenden wird nun von dem Wegverlauf 60 als einem geplanten Fahrweg ausgegangen.

In einem ersten Messbereich 61 der an der linken, hinteren Ecke angeordneten Sensoreinrichtung 13 wird der Bereich der Fahrbahn auf Hindernisse überwacht. Definiert man eine Fahrbahn des Fahrzeugs 1 durch die Ausrichtung der Längsachse 19 des Fahrzeugs, so befindet sich der Messbereich 61 auf einer Fahrfläche neben dieser, gedachten Fahrbahn, die entsprechend durch die Fahrzeuge 53, 54 vor und hinter dem Fahrzeug verläuft. Zur Erfassung des Messbereichs 61 wird der zweite Fernbereichssensor 6 der dritten Sensoreinrichtung 13 aktiviert. Bewegt sich ein erstes, fahrendes Fahrzeug 71 auf der Fahrbahn 59 auf das herausfahrende Fahrzeug 1 zu, so wird eine Warnung ausgegeben. Wird das Fahrzeug 71 bei einem Herausfahren detektiert, so können automatisch die Bremseinrichtungen 28, 29 aktiviert werden, um in diesem Fall ein Herausfahren des Fahrzeugs 1 aus der Parklücke 58 zu verhindern.

Ein weiteres, ebenfalls auf der Fahrbahn 59 fahrendes Fahrzeug wird ebenfalls von dem Messbereich 61 erfasst. Jedoch wird ebenfalls ermittelt, dass sich das zweite Fahrzeug 72 von dem herausfahrenden Fahrzeug 1 wegbewegt. Ist nur das zweite Fahrzeug 72 vorhanden, so wird keine Warnung ausgegeben. In gleicher Weise kann ergänzend hierzu ein zweiter Messbereich 62 vorgesehen sein, der ausgehend von der ersten Sensoreinrichtung 11 an der linken, vorderen Ecke des Fahrzeugs einen im ersten Messbereich 61 spiegelsymmetrisch zugeordneten zweiten Messbereich 62 vor dem Fahrzeug auf der Fahrbahn 59 erfasst.

Für den Fall, dass auf der rechten Fahrzeugseite ebenfalls kein Hindernis gemessen wird und dass die Fahrtrichtungsanzeige nach rechts betätigt wird, so werden Messbereiche an der rechten Fahrzeugseite entsprechend den an der Figur 4 gezeigten, an der linken Fahrzeugseite vorgesehene Messbereiche für ein Ausfahren aus der Parklücke auf dieser Fahrzeugseite überwacht.

Bei dem Herausfahren aus der Parklücke ist es möglich, dass die Messbereiche 61, 62 auch auf die geparkten Fahrzeuge 53, 54 treffen. Diese Hindernisse sind jedoch aus der Nahbereichsmessung bereits bekannt. Zudem kann ermittelt werden, dass diese Hindernisse stehen. In Kenntnis dessen wird bei einem Herausfahren aus der Parklücke entweder ein Messsignal, das von den Fahrzeugen 53, 54 zurückgeworfen wird, bei der Auswertung ignoriert bzw. eine Warnung wird bei einem Messen eines derartigen Hindernisses unterdrückt.

Bevorzugt ist ferner die Steuereinheit 15 mit einer Geschwindigkeitsmesseinheit 9 verbunden. Wenn das Fahrzeug fährt, so hat es eine Eigengeschwindigkeit gegenüber den Hindernissen in seiner Umgebung. Selbst wenn sich das Fahrzeug den Hindernissen annähert, kann über einen Abgleich mit der Eigengeschwindigkeit des Fahrzeugs festgestellt werden, dass diese Hindernisse ruhen. Eine Warnung vor diesen Hindernissen wird bevorzugt erst dann ausgegeben, wenn ein vorgegebener Abstand zu diesen Hindernissen unterschritten wird. Bei dem Einfahren auf die Fahrbahn wird eine Warnung bevorzugt nur dann ausgegeben, wenn sich das Hindernis auch dann dem Fahrzeug 1 nähert, wenn sich das Fahrzeug 1 selbst in Ruhe befindet. Durch den Abgleich der Geschwindigkeit der Abstandsänderung der Hindernisse in der Umgebung des Fahrzeugs 1 im Fahrzeug 1 kann festgestellt werden, ob sich ein Hindernis dem Fahrzeug durch eine eigene Fortbewegung annähert. Da bei Einpark- und Ausparkvorgängen die Fahrgeschwindigkeiten im Allgemeinen recht gering sind, kann ein Abgleich auch über einen Schwellwert erfolgen. So können beispielsweise Hindernisse dann ausgeblendet werden, wenn sie sich langsamer als 4 km/h gegenüber dem Fahrzeug 1 annähern und einen Abstand von mindestens 5 m haben. Hierdurch kann vermieden werden, dass Fußgänger, die noch einen hinreichenden Abstand zu dem Fahrzeug aufweisen, bereits eine Warnung auslösen.

Weiterhin ist es möglich, sich nähernde Objekte nach Art ihrer Geschwindigkeit und nach Art ihres Messsignals zu klassifizieren. So können z. B. Fahrzeuge und Fußgänger, die sich dem in die Fahrbahn einfahrenden Fahrzeug nähern, aufgrund ihres Reflektionsmusters oder aufgrund ihrer unterschiedlichen Geschwindigkeiten unterschieden werden. Somit können unterschiedliche Signale zur Warnung des Fahrers vor verschiedenen Hindernissen ausgegeben werden. Ferner ist es auch möglich, den Fahrer auf derartige Hindernisse hinzuweisen, die keine eindeutige Klassifizierung zulassen. So wäre es beispielsweise möglich, dass sich das erste auf der Fahrbahn fahrende Fahrzeug 71 langsam der Parklücke 58 nähert, da es erkannt hat, dass das Fahrzeug 1 ausfährt, um nun selbst in die Parklücke 58 hineinzufahren. In einem solchen Fall müsste der Fahrer selbst entscheiden, in wieweit er nun aus der Parklücke 58 hinausfährt.

In einer weiteren Ausführungsform ist es auch möglich, dass die Steuereinheit 15 auf den Triebstrang und eine Lenkeinrichtung des Fahrzeugs derart eingreift, dass das Fahrzeug automatisch aus der Parklücke herausgeführt wird. In einer weiteren Ausführungsform ist es möglich, dass der Fahrer zwar bremst und beschleunigt, jedoch die Lenkhandlungen von der Steuereinheit 15 vorgenommen werden, entweder das Herausführen entlang der Auspark-Wegverlaufs 60 oder das Führen entlang der Ausfahrt mit einem hinreichenden Abstand zu den beiden Seiten 33, 34.

## Patentansprüche

1. Warneinrichtung für ein Fahrzeug mit einer Sensoreinrichtung (4, 17) zur Überwachung eines Nahbereichs des Fahrzeugs, mit einer Warneinheit (22, 23, 24) zur Ausgabe einer Warnung, mit einer derart auf eine Fahrbahn gerichtete Sensoreinrichtung (5, 6) zur Überwachung eines Fernbereichs des Fahrzeugs, dass die Sensoreinrichtung (5, 6) zur Überwachung des Fernbereichs bei einem Einfahren des Fahrzeugs auf die Fahrbahn ein sich dem einfahrenden Fahrzeug auf der Fahrbahn näherndes Hindernis erfasst und dass die Warneinheit (22, 23, 24) eine Warnung vor dem sich nähernden Hindernis ausgibt, und mit einer Recheneinheit (2) zur Erstellung eines Umgebungsmodells des Nahbereichs des Fahrzeugs aus den Messdaten der Sensoreinrichtung (4, 17) zur Überwachung des Nahbereichs und zur Bestimmung eines erwarteten Verlaufs der Fahrbahn in Abhängigkeit von dem Umgebungsmodell, **gekennzeichnet durch** eine Ansteuer- und Auswerteeinheit (15) zum Betreiben der Sensoreinrichtung zur Überwachung des Fernbereichs derart, dass Hindernisse in dem Nahbereich des Fahrzeugs von einem Messfeld der Sensoreinrichtung zur Überwachung des Fernbereichs umgangen werden oder dass die Hindernisse in dem Nahbereich bei einer Auswertung der Messung der Sensoreinrichtung zur Überwachung des Fernbereichs ignoriert werden.

2. Warneinrichtung nach einem der vorhergehenden Ansprüche, **dadurch gekennzeichnet, dass** die Sensoren (5, 6) der Sensoreinrichtung zur Überwachung des Fernbereichs an den Fahrzeugseiten an einem vordern und/oder an einem hinteren Ende des Fahrzeugs angeordnet sind.

3. Warneinrichtung nach Anspruch 2, **dadurch gekennzeichnet, dass** die Messfelder (35, 36) der Sensoren (5) der Sensoreinrichtung zur Überwachung des Fernbereichs ungefähr senkrecht zu einer Längsachse des Fahrzeugs ausgerichtet sind.

4. Warneinrichtung nach einem der Ansprüche 1-2, **dadurch gekennzeichnet, dass** die Messfelder (61, 62) der Sensoren (6) der Sensoreinrichtung zur Überwachung des Fernbereichs auf einen Bereich vor und/oder hinter dem Fahrzeug derart ausgerichtet sind, dass wenigstens ein Bereich auf einer benachbarten Fahrspur zu einer gedachten, durch das Fahrzeugs selbst definierten Fahrspur, überwacht wird.

5. Warneinrichtung nach einem der vorhergehenden Ansprüche, **gekennzeichnet durch** eine Schnittstelle (26) zu einer Bremseinrichtung des Fahrzeugs zur Aktivierung einer Fahrzeugbremse für den Fall, dass ein sich auf das Fahrzeug zu bewegendes Hindernis erfasst wird.

6. Verfahren zur Umfeldüberwachung, wobei eine Sensoreinrichtung zur Erfassung eines Fernbereichs einen Fernbereich des Fahrzeugs überwacht, wobei die Sensoreinrichtung zur Überwachung des Fernbereichs bei einem Einfahren des Fahrzeugs auf die Fahrbahn ein sich dem einfahrenden Fahrzeug auf der Fahrbahn näherndes Hindernis erfasst und wobei eine Warnung vor dem sich nähernden Hindernis ausgegeben wird, wobei eine Sensoreinrichtung zur Überwachung des Nahbereichs ein Umgebungsmodell des Fahrzeugs bestimmt, dass in Abhängigkeit des Umgebungsmodells ein erwarteter Verlauf der Fahrbahn bestimmt wird und dass ein Erfassungsbereich der Sensoreinrichtung zur Überwachung des Fernbereichs entsprechend dem Verlauf der Fahrbahn aktiviert oder ausgerichtet wird, **dadurch gekennzeichnet, dass** die Sensoreinrichtung zur Überwachung des Fernbereichs derart betrieben wird, dass die Hindernisse in dem Nahbereich des Fahrzeugs von einem Messfeld der Sensoreinrichtung zur Überwachung des Fernbereichs umgangen wird oder die Hindernisse in dem Nahbereich bei einer Auswertung der Messung der Sensoreinrichtung zur Überwachung des Fernbereichs ignoriert werden.

7. Verfahren nach Anspruch 6, **dadurch gekennzeichnet, dass** die zweite Sensoreinrichtung zur Überwachung des Fernbereichs in einen Umgebungsbereich gerichtet wird, in dem der Abstand zu Hindernissen sprunghaft zugenommen hat.

8. Verfahren nach einem der Ansprüche 6-7, **dadurch gekennzeichnet, dass** die Sensoren der Sensoreinrichtung zur Überwachung des Fernbereichs in Abhängigkeit von einer Fahrtrichtungswahl des Fahrzeugs betrieben werden.

## Claims

1. Warning device for a vehicle having a sensor device (4, 17) for monitoring an area close to the vehicle, having a warning unit (22, 23, 24) for outputting a warning, having a sensor device (5, 6) which is directed at a carriageway and has the purpose of monitoring an area distant from the vehicle in such a way that, when the vehicle drives onto the carriageway, the sensor device (5, 6) for monitoring the area distant from the vehicle senses an obstacle which is approaching the incoming vehicle on the carriageway, and in such a way that the warning unit (22, 23, 24) outputs a warning about the approaching obstacle, and having a computer unit (2) for creating a model of the environment of the area close to the vehicle from the measured data of the sensor device (4, 17) for monitoring the close area and for determining an anticipated profile of the carriageway as a function of the model of the environment, **characterized by** an actuation and evaluation unit (15) for operating the sensor device for monitoring the distant area in such a way that obstacles in the area close to the vehicle are avoided by a measuring field of the sensor device for monitoring the distant area, or in such a way that the obstacles in the close area are ignored in an evaluation of the measurement of the sensor device for measuring the distant area.

2. Warning device according to one of the preceding claims, **characterized in that** the sensors (5, 6) of the sensor device for monitoring the distant area are arranged on the sides of the vehicle at a front and/or at a rear end of the vehicle.

3. Warning device according to Claim 2, **characterized in that** the measuring fields (35, 36) of the sensors (5) of the sensor device for monitoring the distant area are oriented approximately perpendicularly with respect to a longitudinal axis of the vehicle.

4. Warning device according to one of Claims 1-2, **characterized in that** the measuring fields (61, 62) of the sensors (6) of the sensor device for monitoring the distant area are aligned with an area in front of and/or behind the vehicle in such a way that at least one area on an adjacent lane is monitored with respect to a virtual lane which is defined by the vehicle itself.

5. Warning device according to one of the preceding claims, **characterized by** an interface (26) with a brake device of the vehicle for activating a vehicle brake in the event of an obstacle which is moving towards the vehicle being sensed.

6. Method for monitoring environment, wherein a sensor device for sensing a distant area monitors an area distant from the vehicle, wherein, when the vehicle drives onto the carriageway, the sensor device for monitoring the distant area senses an obstacle which is approaching the incoming vehicle on the carriageway, and wherein a warning about the approaching obstacle is output, wherein a sensor device for monitoring the close area determines a model of the environment of the vehicle, wherein an anticipated profile of the carriageway is determined as a function of the model of the environment, and wherein a sensing range of the sensor device for monitoring the distant area is actuated or oriented in accordance with the profile of the carriageway, **characterized in that** the sensor device for monitoring the distant area is operated in such a way that the obstacles in the area close to the vehicle are avoided by a measuring field of the sensor device for monitoring the distant area or the obstacles in the close area are ignored during an evaluation of the measurement of the sensor device for monitoring the distant area.

7. Method according to Claim 6, **characterized in that** the second sensor device for monitoring the distant area is directed into an area of the environment in which the distance from obstacles has suddenly increased.

8. Method according to one of Claims 6-7, **characterized in that** the sensors of the sensor device for monitoring the distant area are operated as a function of a selection of the direction of travel of the vehicle.

## Revendications

1. Dispositif d'avertissement pour un véhicule, doté
d'un dispositif de détection (4, 17) qui surveille la zone proche du véhicule,
d'une unité d'avertissement (22, 23, 24) qui émet un avertissement,
d'un dispositif de détection (5, 6) orienté sur la bande de circulation et qui surveille une zone éloignée du véhicule de telle sorte que le dispositif de détection (5, 6) qui surveille la zone éloignée détecte un obstacle qui s'approche du véhicule qui pénètre sur la bande de circulation lorsque ce dernier pénètre sur la bande de circulation et que l'unité d'avertissement (22, 23, 24) émette un avertissement indiquant que l'obstacle s'approche, et
d'une unité de calcul (2) qui forme un modèle de l'environnement de la zone proche du véhicule à partir des données de mesure du dispositif de détection (4, 17) qui surveille la zone proche et qui détermine l'évolution attendue de la bande de circulation en fonction du modèle d'environnement,
**caractérisé par**
une unité (15) de commande et d'évaluation qui gère le dispositif de détection qui surveille la zone éloignée de telle sorte que le champ de mesure du dispositif de détection qui surveille la zone éloignée contourne les obstacles présents dans la zone proche du véhicule ou que les obstacles présents dans la zone proche soient ignorés lors de l'évaluation de la mesure du dispositif de détection qui surveille la zone éloignée.

2. Dispositif d'avertissement selon l'une des revendications précédents, **caractérisé en ce que** les détecteurs (5, 6) du dispositif de détection qui surveille la zone éloignée sont disposés sur les côtés du véhicule, à l'extrémité avant et/ou à l'extrémité arrière du véhicule.

3. Dispositif d'avertissement selon la revendication 2, **caractérisé en ce que** les champs de mesure (35, 36) des détecteurs (5) du dispositif de détection qui surveille la zone éloignée sont orientés sensiblement à la perpendiculaire de l'axe longitudinal du véhicule.

4. Dispositif d'avertissement selon l'une des revendications 1 et 2, **caractérisé en ce que** les champs de mesure (61, 62) des détecteurs (6) du dispositif de détection qui surveille la zone éloignée sont orientés sur une zone située à l'avant et/ou sur une zone située à l'arrière du véhicule de telle sorte qu'au moins une zone située sur une bande de circulation voisine soit surveillée depuis une bande de circulation imaginaire définie par le véhicule proprement dit.

5. Dispositif d'avertissement selon l'une des revendications précédentes, **caractérisé par** une interface (26) avec le dispositif de freinage du véhicule, qui active les freins du véhicule au cas où un obstacle qui se déplace vers le véhicule est détecté.

6. Procédé de surveillance de l'environnement, dans lequel un dispositif de détection qui détecte une zone éloignée surveille une zone éloignée du véhicule,
le dispositif de détection qui surveille la zone éloignée saisissant un obstacle qui s'approche du véhicule qui pénètre sur une bande de circulation lorsque le véhicule pénètre sur la bande de circulation,
un avertissement qu'un obstacle s'approche étant émis,
le dispositif de détection qui surveille la zone proche définissant un modèle de l'environnement du véhicule de telle sorte que l'évolution attendue de la bande de circulation soit déterminée en fonction du modèle de l'environnement et qu'une zone de détection du dispositif de détection qui surveille la zone éloignée soit activée ou orientée en fonction de l'évolution de la bande de circulation,
**caractérisé en ce que**
le dispositif de détection qui surveille la zone éloignée est géré de telle sorte que le champ de mesure du dispositif de détection qui surveille la zone éloignée contourne les obstacles présents dans la zone proche du véhicule ou que les obstacles présents dans la zone proche soient ignorés lors de l'évaluation de la mesure du dispositif de détection qui surveille la zone éloignée.

7. Procédé selon la revendication 6, **caractérisé en ce que** le deuxième dispositif de détection qui surveille la zone éloignée est orienté sur une partie de l'environnement dans laquelle la distance par rapport aux obstacles a brusquement augmenté.

8. Procédé selon l'une des revendications 6 et 7, **caractérisé en ce que** les détections du dispositif de détection qui surveille la zone éloignée sont gérées en fonction de la direction de roulage sélectionnée pour le véhicule.
